(19) Europäisches Patentamt / European Patent Office / Office européen des brevets

(11) **EP 4 052 862 A1**

(12) **EUROPEAN PATENT APPLICATION**
published in accordance with Art. 153(4) EPC

(43) Date of publication:
**07.09.2022 Bulletin 2022/36**

(21) Application number: **20881558.9**

(22) Date of filing: **30.10.2020**

(51) International Patent Classification (IPC):
***B25J 9/16*** *(2006.01)*

(52) Cooperative Patent Classification (CPC):
**B25J 9/16**

(86) International application number:
**PCT/KR2020/014982**

(87) International publication number:
**WO 2021/086091 (06.05.2021 Gazette 2021/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.10.2019 KR 20190136622**
**30.10.2019 KR 20200091433**

(71) Applicant: **Neuromeka**
**Seoul 04782 (KR)**

(72) Inventors:
• **PARK, Jong Hoon**
**Namyangju-si Gyeonggi-do 12250 (KR)**
• **HEO, Young Jin**
**Changwon-si Gyeongsangnam-do 51425 (KR)**
• **LEE, Woong Yong**
**Goyang-si Gyeonggi-do 10222 (KR)**

(74) Representative: **Michalski Hüttermann & Partner Patentanwälte mbB**
**Kaistraße 16A**
**40221 Düsseldorf (DE)**

(54) **METHOD AND SYSTEM FOR DETECTING COLLISION OF ROBOT MANIPULATOR USING ARTIFICIAL NEURAL NETWORK**

(57)     The present invention relates to a system for detecting the collision of a robot manipulator using an artificial neural network. The system may comprise: joint driving units provided in a plurality of joints of the robot manipulator to drive the plurality of joints, respectively; encoder units provided on sides of the joint driving units to measure the angles of the plurality of joints; and a neural network calculation unit for training the neural network with a large amount of data and inferring, via a pre-processing calculation, to detect that the plurality of joints collide with the outside.

FIG. 2

system for detecting collision of robot manipulator (100)

joint actuator (110)

encoder (120)

neural network operator (130)

controller (140)

collision measurer (150)

**Description**

[Technical Field]

The disclosure relates to a method and system for detecting collision of a robot manipulator using an artificial neural network, in which the robot manipulator detects the collision based on learning using the artificial neural network.

[Background Art]

A robot manipulator is functionally analogous to a human upper limb, and is capable of carrying out a work with a mechanical hand or the like corresponding to an end thereof to grasp and move an object in a space, or a painting work, a welding work, etc. with a spray gun, a welding torch, or the like tool mounted to the end thereof. Here, grasping includes gripping, sucking, and holding.

The analogousness to the human upper limb refers to that a hand is coupled to an arm. However, directly mounting a tool to the arm without the hand is similar to holding the tool in the hand to carry out a work, and this is also regarded as analogous to the human upper limb.

Further, the mechanical hand may include a sucker and a hook. In addition, the manipulator controlled by a human is called a manual manipulator, and the manipulator, which operates based on information from a memory device (an invariable sequence control device, and a variable sequence control device) although it is against safety rules, is classified as an industrial robot.

Meanwhile, a six degrees of freedom (6-DOF) robot manipulator, which is generally used in automation, can carry out precise motion control. When a robot collides with a worker while operating based on a programmed motion, the robot generates so large torque to continuously move toward a destination that the worker may be injured. Accordingly, to ensure the safety of workers who are working in the same space as the robot, the robot is required to have a collision detecting function for autonomously detecting a collision and stropping the operation when the collision occurs.

In the related art, the robot includes a torque sensor attached to each joint and detecting a collision, and thus detects an external collision based on a value measured by the torque sensor. With this, it is possible to sensitively detect a collision. However, it is not economical that the torque sensors are respectively attached to all the joints of the six-axial multi-joint robot.

Further, there have conventionally been proposed many methods of estimating an external collision based on information about dynamics and kinematics of the robot without using the joint torque sensors. However, use of such information about the robot dynamics or expressions of nonlinear functions may cause a problem in that a system load increases.

Due to such conventional problems, a method and system for allowing the robot to more efficiently detect a collision than those of the related art are needed.

[Disclosure]

[Technical Problem]

The disclosure is conceived to solve the foregoing problems of the related art, and aims to allow a multi-axial robot to learn data about collision detection through an artificial neural network, and sensitively detect a collision.

[Technical Solution]

According to an embodiment of the disclosure, a system for detecting a collision of a robot manipulator based on an artificial neural network includes: a joint actuator provided in a plurality of joints of the robot manipulator and configured to actuate each of the plurality of joints; an encoder provided at one side of the joint actuator and configured to measure angles of the plurality of joints; and a neural network operator configured to train a neural network with a lot of data and make inference to detect a collision between the plurality of joints and an outside through a preprocessing operation.

Here, the preprocessing operation may include cycle normalization to generalize the neural network.

Further, the cycle normalization may define a plurality of designated waypoints, and one cycle may be defined as a path for movement of going through the designated waypoints from the first waypoint to the last waypoint one after another and returning back to the first waypoint.

In addition, the system may further include a memory configured to store information related to the cycle, wherein an entire signal of the defined cycle is defined as a reference cycle and stored in the memory.

Further, the system may further include a controller configured to apply a signal related to a control input and perform an operation to control the joint actuator.

Additionally, the signal may include a joint angle, a joint angular velocity and a control torque, which are obtained in every control cycle.

In addition, the signal may be used as an input to the neural network, and a sliding technique may be used to analyze a pattern of the signal.

Further, the neural network may learn about a control signal through supervised learning based on learning data in which a signal and a label form a pair.

Additionally, the neural network may be configured to output a binary signal including a true signal of when a collision occurs, and a false signal of when a collision does not occur.

In addition, learning about the collision signal may include measuring a collision based on contact with a pressure sensor or force sensitive resistor (FSR) provided at one side of the plurality of joints.

Further, a last layer among layers of the neural network may include a probability value between 0 and 1, and it may be identified that a collision occurs when the probability value is higher than or equal to 0.5 based on inference of the neural network.

According to an embodiment of the disclosure, a method of detecting a collision of a robot manipulator based on an artificial neural network includes the steps of: defining a plurality of waypoints and allowing a neural network operator to perform a preprocessing operation through cycle normalization; obtaining a control signal from a collision measurer; training the neural network based on the control signal; and performing control based on a signal transmitted by the trained neural network that detects a collision in real time.

[Advantageous Effects]

According to embodiments of the disclosure, a method and system for detecting collision of a robot manipulator using an artificial neural network have effects as follows.

First, a collision is sensitively detected without performance change. According to the disclosure, the collision is detected in real time based on only an electric current applied to a robot and a joint angle and a joint angular velocity measured by an encoder attached to a joint as essentially required in controlling the robot.

Second, it is economical. According to the disclosure, a collision is detected in real time without separate performance change like a plurality of torque sensors provided in the joints, thereby reducing costs as compared with the conventional one.

[Description of Drawings]

FIG. 1 is a perspective view of a robot manipulator with a system for detecting a collision of the robot manipulator according to an embodiment of the disclosure.

FIG. 2 is a block diagram of a system for detecting a collision of a robot manipulator according to an embodiment of the disclosure.

FIG. 3 is a flowchart of a method of detecting a collision of a robot manipulator according to an embodiment of the disclosure.

FIG. 4 shows a flow of detecting whether a collision occurs or not in a method of detecting a collision of a robot manipulator according to an embodiment of the disclosure.

FIG. 5 schematically shows that a neural network learns about learning data in a method of detecting a collision of a robot manipulator according to an embodiment of the disclosure.

FIG. 6 shows comparison in experimental results between a system for detecting a collision in a robot manipulator according to an embodiment of the disclosure and a conventional momentum-based observer for detecting a collision.

FIG. 7 shows comparison results based on experiments of the system for detecting a collision of the robot manipulator according to an embodiment of the disclosure by decreasing a threshold value for collision detection of the momentum-based observer in the experiments shown in FIG. 6

[Mode for Invention]

Blow, embodiments of the disclosure will be described in detail with reference to the accompanying drawings. However, some elements irrelevant to the gist of the disclosure will be omitted or abstracted, but the omitted elements are not unnecessary in the disclosure and may be used as combined by a person having ordinary knowledge in the art to which the disclosure pertains.

<A system for detecting a collision of a robot manipulator>

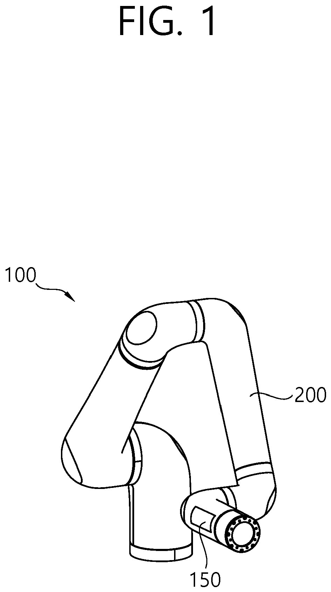

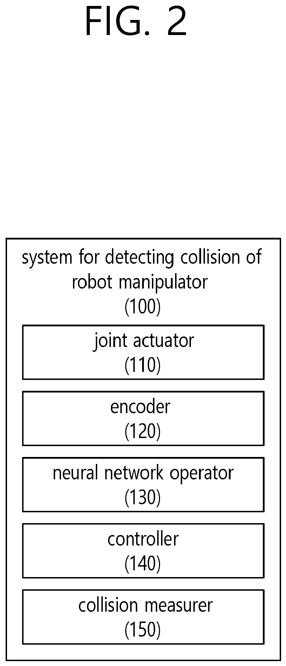

FIG. 1 is a perspective view of a robot manipulator with a system for detecting a collision of the robot manipulator according to an embodiment of the disclosure, and FIG. 2 is a block diagram of a system for detecting a collision of a robot manipulator according to an embodiment of the disclosure.

As shown in FIGS. 1 and 2, a robot manipulator 200 according to an embodiment of the disclosure with a system for detecting a collision of the robot manipulator 200 includes a plurality of joints or shafts, and the plurality of joints operate to rotate with respect to rotary shafts, respectively.

Further, a system 100 for detecting a collision of the robot manipulator 200 may include a joint actuator 110, an encoder 120, a neural network operator 130, a controller 140, and a collision measurer 150.

The joint actuator 110 is configured to actuate the joints so that the robot manipulator 200 can operate. The joint actuator 110 may for example be provided with a motor, and may be plurally provided in the plurality of joints forming the robot manipulator 200, respectively. The j oint actuator 110 may actuate the joint based on a signal received from the controller 140. Here, the signal for controlling the joint may include a signal related to a joint angle, a signal related to a control error and a joint angular velocity obtained from the joint angle by an operation of the controller 140, and a current signal applied to a joint motor. The signal for controlling such joints may also be called a robot signal.

The encoder 120 is provided at one side of the joint actuator 110 and configured to measure the angle of the joint.

The neural network operator 130 is provided with a neural network, and configured to train the neural network to learn about a collision signal based on learning data so that the trained neural network can infer and detect a collision from a signal input in real time. The neural network operator 130 may for example include a general-purpose computing on graphics processing unit (GPGPU). Further, the neural network operator 130 may perform a preprocessing operation to smoothly detect a collision when the trained neural network infers the collision. In this case, the preprocessing operation may include cycle normalization to improve the neural network in generalization performance. When the neural network fails to achieve generalization, performance of detecting a collision is varied depending on change in the motion of the robot manipulator 200 or change in weight of an object grasped by the robot manipulator 200, thereby lowering reliability. On the other hand, when the generalization performance is improved by the cycle normalization according to the disclosure, the neural network is maintained to have high performance of detecting a collision even though the motion of the robot manipulator 200 (e.g., the velocity and route of the robot manipulator 200) is changed or the object grasped by the robot manipulator 200 is changed in weight.

The controller 140 may apply a control input to the robot manipulator 200 and perform an operation. Here, the control input may include an electric current, torque, etc.

<An overall process for detecting a collision>

Below, a method of detecting a collision by the robot manipulator 200 will be described with reference to the accompanying drawing.

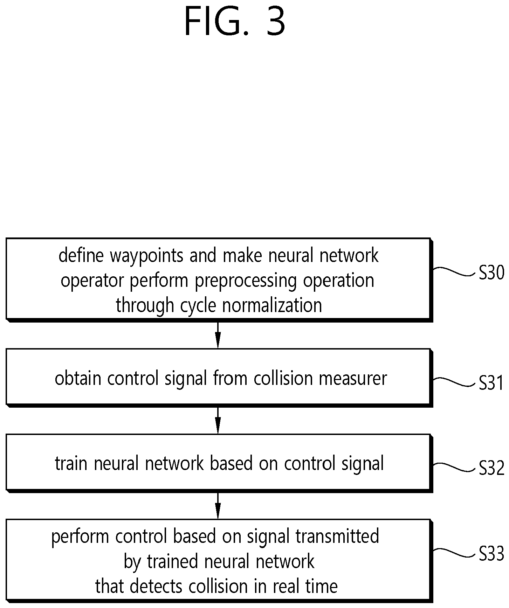

FIG. 3 is a flowchart of a method of detecting a collision of a robot manipulator 200 according to an embodiment of the disclosure.

As shown in FIG. 3, in the method of detecting a collision of the robot manipulator 200 according to the disclosure, a plurality of waypoints are first defined to make the neural network operator 130 perform the preprocessing operation through the cycle normalization.

<S30>

Then, the collision signal is obtained from the collision measurer 150. <S31>

Next, the neural network is trained based on the collision signal. <S32>

Last, control is performed based on a signal corresponding to the detected collision received from the trained neural network in real time. <S33>

Through such an overall process, the robot manipulator 200 according to the disclosure learns about a collision, and then detects the collision in real time, thereby controlling the joints.

<Cycle normalization>

Below, the description about the preprocessing operation, i.e., the cycle normalization will be continued with reference to the accompanying drawings.

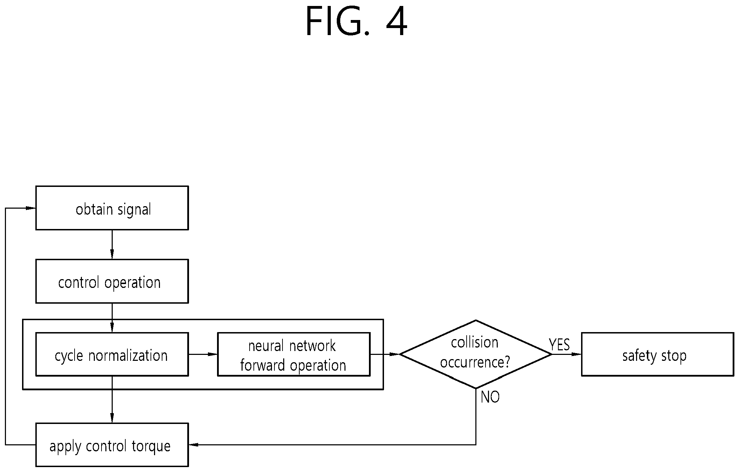

FIG. 4 shows a flow of detecting whether a collision occurs or not in the method of detecting a collision of the robot manipulator 200 according to an embodiment of the disclosure.

As shown in FIG. 4, according to the disclosure, the preprocessing operation of the cycle normalization is performed before detecting an impact or a collision and transmitting the robot signal for controlling the joint. The cycle normalization preprocesses the neural network to be improved in generalization performance, and thus the neural network is maintained to have high performance of detecting a collision even though the motion of the robot (e.g., the velocity and route of the robot) is changed or an object grasped by the robot is changed in weight.

Specifically, when the motion of the robot is programmed to go through the plurality of waypoints designated by a user in sequence, one cycle is defined as a path for movement of going through the designated waypoints from the first waypoint to the last waypoint one after another and returning back to the first waypoint.

For example, when three waypoints are designated, one cycle is defined as a path in which the robot manipulator 200 starts from the first waypoint, goes through the second and third waypoints, and returns back to the first waypoint. Therefore, the robot manipulator 200 that performs repetitive works of for automation repeats the cycle.

When the waypoints for the robot manipulator 200 are initially programmed to carry out the motion, the controller 140 stores the robot signal corresponding to the whole section of the first cycle in a memory provided in the controller 140 while the motion is performed corresponding to the first cycle. Such a cycle, of which the whole section is used in storing the signal, may be defined as a reference cycle. In addition, a cycle after the reference cycle may be defined as an execution cycle.

When a robot program is initially made, the cycle may be set to a predetermined size, and this size may be varied depending on a control cycle and a motion length. For example, when it takes 2 seconds for a certain robot program to go through all the given waypoints and the robot manipulator 200 has a control cycle of 4,000 Hz (control of 4000 times per second), the robot signal is obtained and stored by performing a control operation 8,000 times for 2 seconds, and therefore this motion has a cycle size of 8,000. Thus, 8,000 robot signals may be stored for the reference cycle in the memory. The robot manipulator 200 repetitively works as programmed, and therefore the reference cycle has the same size as the execution cycle unless the robot program is modified. However, there may be an error of about $\pm$ 5 between the reference cycle and the execution cycle during an actual work because an operating system has an error in calculating the control cycle in real time.

The robot signal will be described in more detail. For example, it will be assumed that the robot manipulator 200 has six degrees of freedom (6-DOF), and the controller 140 obtains joint angles of $q=[q_i, ..., q_6]$, joint angular velocities of $q'=[q'_i, ..., q'_6]$, and control torques of $\tau=[\tau_1, ..., \tau_6]$ applied to the robot, in every control cycle.

In this case, the robot signal includes all the signals about the joint angles, and all the signals about the joint angular velocities, which are defined as a vector $x=[q, q', \tau]$. The robot signal is not only variable depending on degrees of freedom, but also additionally includes a separate signal obtained by calculation of the controller 140. For example, destination joint angles $q_{des}=[q_{des1}, ..., q_{des6}]$, joint angular errors $e=[q_{desi}-q_i, ..., q_{des6}-q_6]$, and the like may be included in or excluded from the robot signal.

Here, when a time variable is t, the robot signal at the current time is expressed as $X_t$. The robot signal is used as an input to the neural network, and a sliding window technique may be used so that the neural network can analyze a pattern of the robot signal. When the sliding window has a size of W, the robot signal to which the sliding window is applied is expressed as follows.

$$X_t = [x_{t-W+1}, \ldots, x_{t-1}, x_t]$$

This means that W pieces of data are included in the past with respect to the current time. Because the robot manipulator 200 is controlled based on discrete time, the time variable t is also expressed as an index indicating a position in the cycle.

Like the foregoing example, it will be assumed that the sliding window having a size of 200 is used in the execution cycle in which the motion of the robot manipulator 200 is performed by control of 8,000 times for 2 seconds. In this case, when the current time is the time at which the 2,000th control cycle starts with respect to a cycle start, the robot signal in the execution cycle is expressed as follows.

$$X_{2000} = [x_{1801}, \ldots, x_{1999}, x_{2000}]$$

This is a connection of W robot signals in the past including the present with respect to the current time. To this end, past data more than W needs to be temporarily stored in the memory to obtain a sliding window signal every time.

When the sliding window is applied to the reference cycle, a sliding window robot signal for the reference cycle is obtained by extracting the 1801st to 2000th signals from the stored robot signals because the robot signals of the whole cycle have been stored. This is expressed as follows.

$$\bar{X}_{2000} = \left[ \bar{x}_{1801}, \cdots, \bar{x}_{1999}, \bar{x}_{2000} \right]$$

In this case, the cycle normalization is expressed by a difference in the robot signal between the reference cycle and the execution cycle at the same timing. This is expressed as follows.

$$\hat{X}_t = \bar{X}_t - X_t = \left[ \bar{x}_{t-W+1} - x_{t-W+1}, \cdots, \bar{x}_{t-1} - x_{t-1}, \bar{x}_t - x_t \right]$$

In this case, when a cycle start index is 0, $\hat{X}_t$ is a final cycle normalization robot signal at the $t^{th}$ time, and is used as an input to the neural network.

In this way, the cycle normalization makes signal normalization in real time based on signal difference in motion between the execution cycle and the reference cycle, and therefore the normalized signal has a constant pattern even though the waypoints of the motion, the velocity of the robot manipulator 200, the weight of the robot manipulator 200, etc. are changed, thereby improving the generalization performance of the neural network.

<Neural network learning>

Further, it will be described in detail with reference to the accompanying drawings that the neural network is trained based on the learning data.

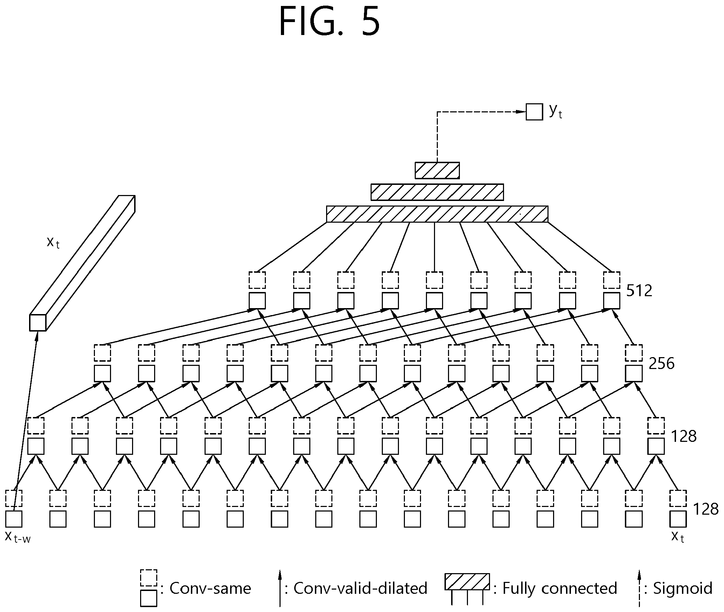

FIG. 5 schematically shows that a neural network learns about learning data in a method of detecting a collision of a robot manipulator according to an embodiment of the disclosure.

As shown in FIG. 5, the neural network according to the disclosure may learn about a collision signal through supervised learning based on the learning data in which a signal and a label form a pair. The supervised learning refers to a learning method of repetitively informing the neural network of a correct answer to a given signal based on the data in which the signal and the label form a pair.

Further, according to the disclosure, detection of a collision is to identify the presence of the collision in terms of an algorithm. This is a binary signal that may be expressed as true or false. Therefore, the neural network may be trained to output a true signal when a collision occurs, and a false signal when a collision does not occur.

Although the disclosure is different from the related art in that an additional sensor is not used, the collision measurer 150 may be used in obtaining the learning data as it is provided at one side of the joint and obtains a signal of a collision based on contact. The collision measurer 150 may for example include a pressure sensor or a force sensitive resistor (FSR), and may be turned on and off based on contact to thereby detect a collision.

The collision measurer 150 is being connected to the controller 140 so that the controller 140 can obtain the signal of the collision measurer 150 in sync with the robot signal during the control operation of the robot manipulator 200, and repetitively works based on a program after being attached to a certain portion of the joint of the robot manipulator 200.

For example, when the collision measurer 150 attached to the joint is impacted by a hand or a tool while the robot manipulator 200 is operating, the collision measurer 150 can obtain a collision signal applied to the joint.

Further, the robot signal and the collision signal may be repetitively obtained by randomizing the motion program of the joint, the attached position of the collision measurer 150, and timing at which a collision occurs during the motion.

In this case, the signal of the collision measurer 150 among the obtained signals may be expressed as y, and may be defined as the collision signal. When the collision signal at the current time is $y_t$, a signal-label data pair for training the neural network may be defined as $(X_t, y_t)$.

The neural network is trained by the supervised learning method after the learning data is sufficiently obtained. The neural network or artificial neural network used in this case is a type of convolution neural network. This is to train a neural network through a back propagation method that has generally been used in the related art, and a loss function may use binary cross-entropy generally used in training a classifier.

<Real-time neural network inference>

In addition, a collision may be detected in real time during the operation of the robot manipulator 200 based on real-time neural network inference. When a program for actuating the robot manipulator 200 is first used by a user to designate some waypoints, it will be assumed that a robot manipulator program is made to repetitively visit the designated waypoints.

In this case, the first cycle is the reference cycle, and the robot signal of the whole section of the cycle is stored in the memory of the controller 140 as described above while the motion of the reference cycle is carried out. In this situation, a collision should not occur.

In the reference cycle, a collision is detected by a conventional method. When the collision is detected in the reference cycle by the conventional method, a robot signal is newly stored by regarding the next cycle as the reference cycle. On the other hand, when the entire robot signal of the cycle is normally stored without any collision in the reference cycle, the execution cycle is performed in succession.

From the beginning of the execution cycle, the controller 140 stores the robot signal as much as the sliding window in the memory. The robot signal to which the cycle normalization is applied is input to the trained neural network in advance, and the neural network carries out the inference based on the robot signal.

As shown in FIG. 5, the last layer of the neural network is sigmoid, and thus an inference result has a probability value between 0 and 1. When the probability value is higher than $\sigma$, it may be identified that a collision occurs. In this case, $\sigma$ is generally 0.5, but may be 0.6 or 0.7 according to embodiments.

The presence of the collision is identified by the inference, and the controller 140 implements a safety stop function when the collision occurs. A safety stop is merely a general reaction of the robot when the collision occurs. According to alternative embodiments, various reactions of the robot may be set.

<Experimental results of the system for detecting a collision of the robot manipulator>

Below, comparison in experimental results between the system 100 for detecting a collision of the robot manipulator 200 according to the disclosure and a conventional system using a momentum-based observer for detecting a collision will be described.

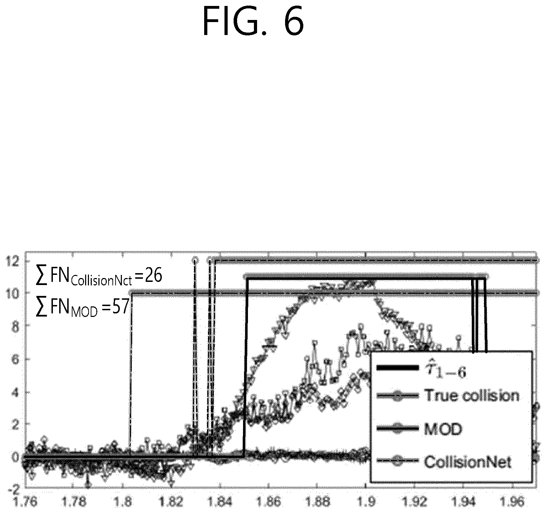

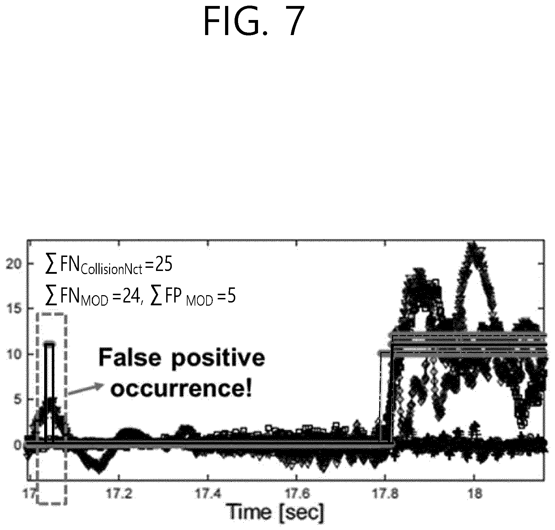

FIG. 6 shows comparison in experimental results between a system for detecting a collision in the robot manipulator 200 according to an embodiment of the disclosure and a conventional momentum-based observer for detecting a collision, and FIG. 7 shows comparison results based on experiments of the system for detecting a collision of the robot manipulator 200 according to an embodiment of the disclosure by decreasing a threshold value for collision detection of the momentum-based observer in the experiments shown in FIG. 6.

As shown in FIGS. 6 and 7, an algorithm for detecting a collision based on the cycle normalization and the neural network proposed according to the disclosure was compared with a conventional method by experiments. The comparison was made with respect to false negative, false positive, and collision detection accuracy among the performance testing items in the aforementioned robot collision detection. The conventional method of detecting a collision without using a sensor is a method of detecting a collision when external force estimated by the momentum-based observer is higher than or equal to a preset collision-detecting threshold value. This is called a momentum-based observer-based collision detection (MOD). In general, this method is commonly used by commercial robots and robot researchers.

The lower the threshold value for the collision detection, the more sensitive the collision detection. However, the low threshold value may cause the false positive to occur. For a fair experiment, the threshold value for the collision detection of the conventional method was set as the minimum value as long as the false positive does not occur. Under this condition, the conventional method and the method according to the disclosure were experimentally compared in accuracy and sensitivity of detecting the collision.

FIG. 6 shows the experimental results of those as described above. In the experiments, the collision detection according to the disclosure was applied to the 6-DOF robot manipulator 200, and the conventional MOD was applied to the same system. It will be understood that the collision detection according to the disclosure more rapidly and more sensitively detects a collision than the conventional MOD even when the threshold value for the collision detection in the MOD is set as the minimum value as long as the false positive does not occur.

When the MOD is set to have a lower threshold value so that the conventional method can more sensitively detect a collision, the false positive occurs as shown in FIG. 7. However, in this case, it will be understood that the false positive does not occur in the method according to the disclosure. Therefore, it will be appreciated that the method based on the neural network according to the disclosure has higher sensitivity to the collision detection and stronger tolerance against the false negative than the conventional MOD.

The foregoing embodiments of the disclosure are described for illustrative purposes. Various modifications, changes and additions can be made by a person having ordinary knowledge in the art without departing the sprit and scope of the disclosure, and such modifications, changes and additions are construed as being included in the scope of the disclosure.

**Claims**

1. A system for detecting a collision of a robot manipulator based on an artificial neural network, the system comprising:

   a joint actuator provided in a plurality of joints of the robot manipulator and configured to actuate each of the plurality of joints;
   an encoder provided at one side of the joint actuator and configured to measure angles of the plurality of joints; and
   a neural network operator configured to train a neural network with a lot of data and make inference to detect a collision between the plurality of joints and an outside through a preprocessing operation.

2. The system of claim 1, wherein the preprocessing operation comprises cycle normalization to generalize the neural network.

3. The system of claim 2, wherein

   the cycle normalization defines a plurality of designated waypoints, and
   one cycle is defined as a path for movement of going through the designated waypoints from the first waypoint to the last waypoint one after another and returning back to the first waypoint.

4. The system of claim 3, further comprising a memory configured to store information related to the cycle, wherein an entire signal of the defined cycle is defined as a reference cycle and stored in the memory.

5. The system of claim 1, further comprising a controller configured to apply a signal related to a control input and perform an operation to control the joint actuator.

6. The system of claim 5, wherein the signal comprises a joint angle, a joint angular velocity and a control torque, which are obtained in every control cycle.

7. The system of claim 6, wherein

   the signal is used as an input to the neural network, and
   a sliding technique is used to analyze a pattern of the signal.

8. The system of claim 1, wherein the neural network learns about a control signal through supervised learning based on learning data in which a signal and a label form a pair.

9. The system of claim 8, wherein the neural network is configured to output a binary signal comprising a true signal of when a collision occurs, and a false signal of when a collision does not occur.

10. The system of claim 8, wherein learning about the collision signal comprises measuring a collision based on contact with a pressure sensor or force sensitive resistor (FSR) provided at one side of the plurality of joints.

11. The system of claim 8, wherein

    a last layer among layers of the neural network comprises a probability value between 0 and 1, and
    it is identified that a collision occurs when the probability value is higher than or equal to 0.5 based on inference of the neural network.

12. A method of detecting a collision of a robot manipulator based on an artificial neural network, the method comprising:

    defining a plurality of waypoints and allowing a neural network operator to perform a preprocessing operation through cycle normalization;
    obtaining a control signal from a collision measurer;
    training the neural network based on the control signal; and
    performing control based on a signal transmitted by the trained neural network that detects a collision in real time.

# FIG. 1

# FIG. 2

| system for detecting collision of robot manipulator (100) |
| --- |
| joint actuator (110) |
| encoder (120) |
| neural network operator (130) |
| controller (140) |
| collision measurer (150) |

# FIG. 3

```
┌─────────────────────────────────────────┐
│   define waypoints and make neural network │
│   operator perform preprocessing operation │        ~S30
│         through cycle normalization        │
└─────────────────────────────────────────┘
                     │
                     ▼
┌─────────────────────────────────────────┐
│   obtain control signal from collision measurer │   ~S31
└─────────────────────────────────────────┘
                     │
                     ▼
┌─────────────────────────────────────────┐
│   train neural network based on control signal │   ~S32
└─────────────────────────────────────────┘
                     │
                     ▼
┌─────────────────────────────────────────┐
│    perform control based on signal transmitted │
│          by trained neural network          │      ~S33
│       that detects collision in real time   │
└─────────────────────────────────────────┘
```

# FIG. 4

```
obtain signal → control operation → cycle normalization → apply control torque
```

neural network forward operation

collision occurrence?

YES → safety stop

NO

# FIG. 5

# FIG. 6

# FIG. 7

## INTERNATIONAL SEARCH REPORT

International application No.

**PCT/KR2020/014982**

### A. CLASSIFICATION OF SUBJECT MATTER

**B25J 9/16**(2006.01)i

According to International Patent Classification (IPC) or to both national classification and IPC

### B. FIELDS SEARCHED

Minimum documentation searched (classification system followed by classification symbols)

B25J 9/16(2006.01); B25J 13/08(2006.01); B25J 19/06(2006.01); B25J 9/06(2006.01); B25J 9/22(2006.01); G05B 13/02(2006.01); G05B 19/18(2006.01); G05B 19/4061(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 로봇(robot), 매니퓰레이터(manipulator), 충돌(collision), 신경망(neural network), 학습(learning)

### C. DOCUMENTS CONSIDERED TO BE RELEVANT

| Category* | Citation of document, with indication, where appropriate, of the relevant passages | Relevant to claim No. |
|---|---|---|
| X<br>Y | HEO et al. Collision Detection for Industrial Collaborative Robots: A Deep Learning Approach. IEEE Robotics and Automation Letters. Vol. 4, No. 2, pp. 740-746, April 2019.<br>See pages 740-746. | 12<br>1-11 |
| Y | JP 07-223181 A (YASKAWA ELECTRIC CORP.) 22 August 1995 (1995-08-22)<br>See paragraphs [0004]-[0008] and figure 1. | 1-11 |
| A | KR 10-2015-0080050 A (KOREA ELECTRONICS TECHNOLOGY INSTITUTE) 09 July 2015 (2015-07-09)<br>See paragraphs [0028], [0030] and [0034]-[0037]. | 1-12 |
| A | JP 05-119815 A (TOSHIBA CORP.) 18 May 1993 (1993-05-18)<br>See paragraph [0009], claim 1 and figure 1. | 1-12 |
| A | WO 2019-162109 A1 (ABB SCHWEIZ AG) 29 August 2019 (2019-08-29)<br>See page 10, lines 15-20, page 12, lines 15-23 and figures 1 and 3. | 1-12 |

☑ Further documents are listed in the continuation of Box C.   ☑ See patent family annex.

| | | |
|---|---|---|
| \* | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **18 January 2021** | **20 January 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**EP 4 052 862 A1**

<table>
<tr><td colspan="3" style="text-align:center">INTERNATIONAL SEARCH REPORT</td><td colspan="2">International application No.<br><br>**PCT/KR2020/014982**</td></tr>
<tr><td colspan="5">**C.    DOCUMENTS CONSIDERED TO BE RELEVANT**</td></tr>
<tr><td>Category*</td><td colspan="3">Citation of document, with indication, where appropriate, of the relevant passages</td><td>Relevant to claim No.</td></tr>
<tr><td>PX</td><td colspan="3">KR 10-2139229 B1 (NEUROMEKA CO., LTD.) 29 July 2020 (2020-07-29)<br>See claims 1, 4-7, 10 and 12.<br>(* This document is the published patent of a earlier application that serves as a basis for claiming priority of the present international application.)</td><td>1-12</td></tr>
</table>

Form PCT/ISA/210 (second sheet) (July 2019)

**INTERNATIONAL SEARCH REPORT**
Information on patent family members

International application No.

**PCT/KR2020/014982**

| Patent document cited in search report | | | Publication date (day/month/year) | Patent family member(s) | | | Publication date (day/month/year) |
|---|---|---|---|---|---|---|---|
| JP | 07-223181 | A | 22 August 1995 | None | | | |
| KR | 10-2015-0080050 | A | 09 July 2015 | None | | | |
| JP | 05-119815 | A | 18 May 1993 | None | | | |
| WO | 2019-162109 | A1 | 29 August 2019 | CN | 111712356 | A | 25 September 2020 |
| | | | | US | 2020-0376666 | A1 | 03 December 2020 |
| KR | 10-2139229 | B1 | 29 July 2020 | None | | | |

Form PCT/ISA/210 (patent family annex) (July 2019)